# EUROPEAN PATENT SPECIFICATION

(11) **EP 3 217 622 B1**
(45) Date of publication and mention of the grant of the patent: **28.10.2020**
(21) Application number: 15857639.7
(22) Date of filing: 30.10.2015
(51) Int. Cl.: H04L 29/08

(54) **DATA BACKFILL METHOD AND DEVICE**
VERFAHREN UND VORRICHTUNG ZUR DATENRÜCKSICHERUNG
PROCÉDÉ ET DISPOSITIF D'AJOUT DE DONNÉES MANQUANTES

(30) Priority: 06.11.2014 CN 201410637967
(43) Date of publication of application: 13.09.2017
(73) Proprietor: Alibaba Group Holding Limited, Grand Cayman (KY)
(72) Inventor: TIAN, Jianghai, Hangzhou Zhejiang 311121 (CN)
(74) Representative: McKinnon, Alistair James
(86) International application number: PCT/CN2015/093312
(87) International publication number: WO 2016/070752

(56) References cited:
- WO-A1-2013/075612
- CN-A- 101 272 237
- CN-A- 101 369 272
- CN-A- 103 647 789
- US-A1- 2002 016 830
- US-B1- 6 950 980
- US-B1- 6 950 980

## Description

### FIELD OF THE INVENTION

The present application relates to a field of Internet technology. In particular, it relates to a data backfilling method and system.

### BACKGROUND OF THE INVENTION

When users at a web page execute operations such as account registration and filling in account information, they need to enter the appropriate data in input boxes on the web page. Examples include account name, account password, contact information and other such information. For information classification reasons, the various kinds of information that they enter are allocated to different web pages. For example, after filling in "Name" and "Age" in the first page, a user skips to the second page by clicking "Next" on the first page. At the same time, the content entered in the first page is submitted to a server. If, while performing an operation on the second page, the user wishes to modify the first page "Name," the user may click "Previous" on the second page to return to the first page.

When the user returns to the first page, the browser needs to take "Name," "Age" and other such content previously entered by the user and backfill them into the corresponding input boxes of the first page so that the user may conveniently view and modify them.

However, in actual applications, when Chinese characters occur in the content entered by the user, "garbled characters" will often appear when backfilling takes place. As a result, the user's experience is adversely affected, for the user is unable to have a normal view of the content that was entered earlier.

US 2002/016830 discloses a communication method between a network client and a network server, wherein a network document requested by the network client is sent from the network server to the network client and is displayed by a browser of the network client to the user for processing. Changes and supplements on the network client carried out by the user on the network document on the network client, are recorded via software and stored in the network server as user-specific data. When the network document is loaded again by the user, the network document generated during previous loading on the network client through interaction of the user is restored by means of the stored user-specific data. In this fashion, every client can obtain his/her individual network page every time he/she loads a network document.

US 6,950,980 discloses a system, method, and program product that enables saving a submitted form of a web page. A browser application receives from a user data for a form in a web page. Upon the submission of the form with the data to a server system hosting the web page, an address of the web page, the data provided from the user for the form, and at least one field identifier for associating the data to at least one respective field of the form, are saved into a volatile memory of the client. The address, the data, and the at least one field identifier remain stored in the volatile memory system after the browser application is closed. When the user opens the browser that had been closed and again requests retrieval of the web page, the browser retrieves from the server the web page that is at the address stored in the volatile memory. The browser restores the form of the web page with the data stored in the volatile memory. The browser calls a clipboard operation of an operating system on which the client system operates to save the address of the web page, the data for the form, and the one or more field identifiers, into the volatile memory. If the data for the form is successfully submitted to the server and the browser receives another request for a next web page from the user, the browser application erases, if required, the data from the volatile memory system.

### SUMMARY OF THE INVENTION

In view of the above, the present application provides a method and a system according to claims 1 and 6 for data backfilling that can smoothly achieve backfilling operations for page data and which will not let garbled characters appear in the backfill content.

To achieve the objective stated above, the present application puts forward the following technical schemes:
in accordance with a first aspect of the present application, it puts forward a data backfilling method, which comprises:
associatively sending user input data in the first page of a terminal and the identifiers of the input boxes in said first page to a server for them to be stored by said server, the stored content mapping to the sessionID of said terminal and to the identifier of said first page;
when said first page is returned to from a second page, sending a data acquisition request to said server, said data acquisition request comprising the sessionID of said terminal and the identifier of said first page;
receiving said first page user input data and the associated identifiers of the input boxes in said first page sent back by said server according to said data acquisition request, and taking said first page user input data and backfilling it into the corresponding input boxes in said first page.

A data backfilling method put forward in accordance with a second aspect of the present application. It comprises:
associatively storing the first page user input data sent by the terminal and the identifiers of the input boxes in said first page, with the stored content mapping to the sessionID of said terminal and the identifier of said first page;
receiving the data acquisition request sent by said terminal when said first page is returned to from the second page;

using the sessionID for said terminal and the identifier for said first page contained in said data acquisition request as a basis for sending back said first page user input data and the associated identifiers for the input boxes in said first page to said terminal so that said terminal can backfill said first page user input data into the corresponding input boxes in said first page.

A data backfilling means put forward in accordance with a third aspect of the present application. It comprises:
a sending unit, which associatively sends user input data in the first page of the terminal and the identifiers of the input boxes in said first page to a server for them to be stored by said server, with the stored content mapping to the sessionID of said terminal and to the identifier of said first page;
a requesting unit, which, when said first page is returned to from a second page, sends a data acquisition request to said server, said data acquisition request comprising the sessionID of said terminal and the identifier of said first page;
a backfilling unit, which receives said first page user input data and the associated identifiers of the input boxes in said first page sent back by said server according to said data acquisition request, and which takes said first page user input data and backfills it into the corresponding input boxes in said first page.

A data backfilling means put forward in accordance with a fourth aspect of the present application. It comprises:
a data storage unit, which associatively stores the first page user input data sent by the terminal and the identifiers of the input boxes in said first page, with the stored content mapping to the sessionID of said terminal and the identifier of said first page;
a request receiving unit, which receives the data acquisition request sent by said terminal when said first page is returned to from the second page;
a data returning unit, which uses the sessionID for said terminal and the identifier for said first page contained in said data acquisition request as a basis for sending back said first page user input data and the associated identifiers for the input boxes in said first page to said terminal so that said terminal can backfill said first page user input data into the corresponding input boxes in said first page.

As is clear from the technical schemes above, the present application uses associative storage of page data on a server, with the result that the server performs unified encoding and decoding operations on the page data and no garbled characters appear because of terminal-side browser type differences or because of incompatibilities between browser and server. It thus ensures smooth backfilling of page data.

However, in actual applications, when Chinese characters occur in the content entered by the user, "garbled characters" will often appear when backfilling takes place. As a result, the user's experience is adversely affected, for the user is unable to have a normal view of the content that was entered earlier.

### BRIEF DESCRIPTION OF THE DRAWINGS

Various embodiments of the invention are disclosed in the following detailed description and the accompanying drawings.
FIG. 1 presents a flowchart of a data backfilling method in the related art.
FIG. 2 presents a flowchart of a terminal side-based data backfilling method of an exemplary embodiment of the present application.
FIG. 3 presents a flowchart of a server side-based data backfilling method of an exemplary embodiment of the present application.
FIG. 4 presents a flowchart of a data backfilling method of an exemplary embodiment of the present application.
FIG. 5 presents a structural diagram of a terminal of an exemplary embodiment of the present application.
FIG. 6 presents a block diagram of a terminal side-based data backfilling means of an exemplary embodiment of the present application.
FIG. 7 presents a structural diagram of a server of an exemplary embodiment of the present application.
FIG. 8 presents a block diagram of a server side-based data backfilling means of an exemplary embodiment of the present application.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

"Backfilling" in the technical schemes of the present application should be understood as follows: when a terminal returns to a page in accordance with a user operation, it takes the data that the user previously input into this page and re-enters it in a one-to-one correspondence into the input boxes of the page so that the user may conveniently view it and perform editing operations. Because the data is not entered for the first time, but was rather reentered back into this page from another page, this operation is called "backfilling."

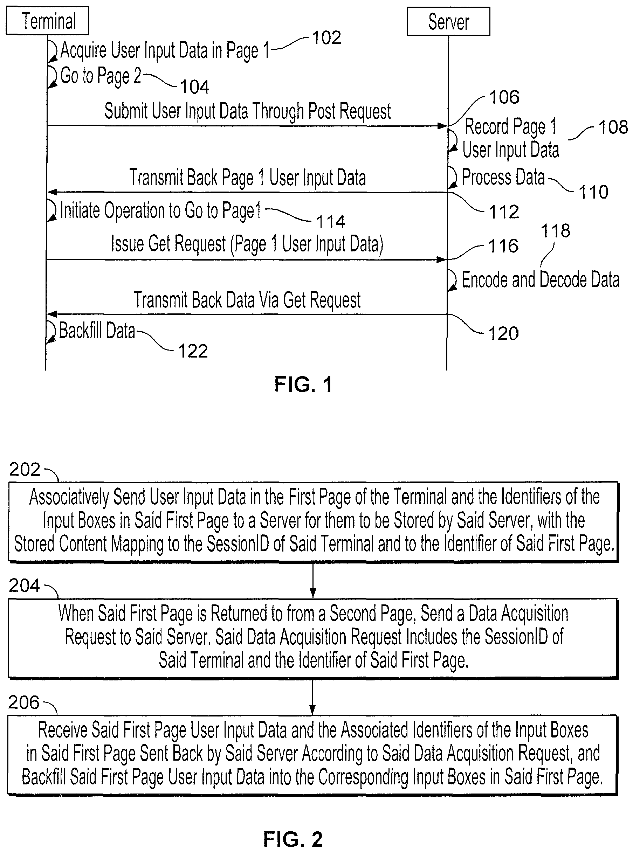

Please refer to FIG. 1. FIG. 1 presents a flowchart of a data backfilling method in the related art. It comprises the steps below:
Step 102: Acquire the data input by the user in page 1 of the terminal browser. Assume that page 1 is the page where the user registers an account. For example, the user may fill in their own name "Zhang San" and their age "10" in the "Name" and "Age" input boxes on page 1.
Step 104: The user initiates a jump to page 2. For example, by clicking the "Next" operation button on page 1, the user triggers this go-to operation.
Step 106: Through a post request, the terminal browser submits the data input by the user in page 1 to the server.
Step 108: The server receives the data input by the user in page 1 and records it in the server.
Step 110: The server may process (e.g., perform a data check on) the recorded user input data.
Step 112: The server transmits the user input data in page 1 back to the terminal browser, and the terminal records it.
Step 114: If, while performing operations in page 2, the user executes the operation to go to page 1 by clicking, for example, the "Previous" button on page 2, the data backfilling operation consisting of steps 116 through 122 will be triggered for page 1.
Step 116: The terminal browser issues a get request to the server. This get request includes user input data recorded by the terminal in page 1 in step 112.

The get request is structured to include the URL (Uniform Resource Locator) of the target page and the data that needs to be transmitted. Moreover, this data directly follows the URL. For example:

"http://www.123456789.com?name= 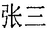 &age=10," wherein "http://www.123456789.com" is the URL information, and "name= 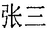 &age=10" is the data input by the user in page 1. The user input data that specifically corresponds to the input box "Name" is " 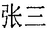 " ("Zhang San"). The user input data that specifically corresponds to the input box "Age" is "10."

In fact, the user may directly view the get request content (e.g., the above "http://www.123456789.com?name= 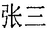 &age=10") in the terminal browser's address bar. However, the user cannot directly receive the data "name= 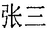 " and "age=10." Because " 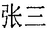 " are Chinese characters, the terminal browser needs to perform an encoding operation using its own encoding method. For example, when the terminal browser encodes with UTF-8 (Unicode), it compiles " 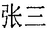 " as "&#x5F20&#x4E09." Thus, the get request that the server receives may be "http://www.123456789.com?name=&#x5F20&#x4E09&age=10."

Step 118: After receiving the get request from the terminal browser, the server performs decoding and encoding operations on the data "name=&#x5F20&#x4E09&age=10" according to its own encoding method.

Of course, in addition to the decoding and encoding operations on the data, the server will also subject the received data to an integrity check, a user identity check and other processing on the business layer.

Step 120: The server sends the decoded and encoded data back to the terminal browser through the get request.

Step 122: The terminal browser backfills the input boxes in page 1 with the corresponding received data.

However, after the terminal browser in step 112 receives and records the data transmitted back by the server, it still needs to take the recorded data and, by performing steps 116 through 120, "round-trip" transmit it once on the server, with the result that in this transmission process the data needs to undergo separate decoding and encoding operations on the terminal browser and on the server. Therefore, if either the terminal browser or the server is unable to recognize the other's encoding method, the result will be that the data encoded by it will be garbled characters (a character string unrelated to the original meaning). Moreover, this will ultimately appear as backfill data in page 1, which will have an extremely negative impact on the user's experience by making the user unable to easily view the data.

Clearly, the related art requires repeated transmission of the backfill data on the terminal browser and the server, meaning that the data which is ultimately for backfilling needs to undergo separate decoding and encoding operations by the terminal browser and the server.

Thus, because of mismatched encoding/decoding methods between the terminal and the server, it is extremely easy for backfill data containing Chinese to involve the appearance of garbled characters when backfilled into a page.

### What needs to be explained:

In the related art, let us take the example of step 108. Although the server allocated the appropriate cache space for the terminal browser (the corresponding sessionID), the life cycle for stored data in the cache space is determined according to "requests." That is, each time the server receives a request, the data contained in the request is recorded in the cache space, and the previously stored data is deleted. Therefore, the server may be regarded as merely "recording" received data and not storing it in the true sense, for the terminal browser cannot perform search or acquisition operations as it might intend. This also makes it necessary for the terminal browser and the server to conduct between themselves the repeated data transmissions shown in FIG. 1.

However, the related art data backfilling process only involves the transmission of data between the terminal browser and the server, and the server in the process needs only "record" the data. As a result, although the entire scheme appears to have a complex process flow, it is in fact a "light-volume" processing process and is thus broadly applied to data backfill processing for terminal browsers.

To avoid the garbled character problem in the related art, the present application makes improvements to the technical scheme described above. By avoiding repeated transmission of data, it can smoothly achieve backfill operations for page data. The following embodiments are provided in order to further explain the present application.

### 1. Terminal side

Please refer to FIG. 2. FIG. 2 presents a flowchart of a terminal side-based data backfilling method of an exemplary embodiment of the present application. This method applies to the terminal and may comprise the steps described below:

Step 202: Associatively send user input data in the first page of the terminal and the identifiers of the input boxes in said first page to a server for them to be stored by said server, with the stored content mapping to the sessionID of said terminal and to the identifier of said first page.

In the present embodiment, it is possible to package the first page user input data and the associated input box identifiers in a preset manner and to send the packaged data to the server. The packaged data may make use of JSON (JavaScript Object Notation) format so as to minimize the volume of transmitted data.

In the present embodiment, when the aforesaid packaging operation is executed, it is possible to package the input box identifier and the entered data whenever a user has completed an input operation for an input box and thus to establish an association between the input box identifier and the entered data. Or it is possible to associatively execute a packaging operation on all user input data in the first page with the input box identifiers.

In the present embodiment, sessionID is the unique identifier allocated by the server for the terminal. Specifically, it is allocated by the server when the terminal first accesses it, and it is stored by the terminal in a local cookie. Thus, whenever the terminal accesses the server, it declares its own identity through the sessionID stored in the carried cookie. The identifier for the first page may be the first page's URL or URI (Uniform Resource Identifier) information. Therefore, the server may use a combination of the sessionID and URL/URI information to accurately distinguish and identify the stored content corresponding to each page.

Step 204: When said first page is returned to from a second page, send a data acquisition request to said server. Said data acquisition request includes the sessionID of said terminal and the identifier of said first page.

In the present embodiment, the second page and the first page may have an "adjacent" relationship. That is, when the user clicks the "Next" button on the first page, it goes directly to the second page, and when the user clicks the "Previous" button on the second page, it goes directly to the first page. Or the second page may not be adjacent to the first page. For example, the first page is "Page 1," but the second page is "Page 3." Thus, when the destination directly selected from the second page is "Page 1," it can directly go to the first page.

Step 206: Receive said first page user input data and the associated identifiers of the input boxes in said first page sent back by said server according to said data acquisition request, and backfill said first page user input data into the corresponding input boxes in said first page.

In the present embodiment, the user input data that the terminal subjects to backfill operations comes directly from the server. There is no need for the server to transmit the user input data back to the terminal browser to be recorded there (corresponding to step 112 shown in FIG. 1) when the terminal browser goes to "Next" from the first page, nor is it necessary to repeatedly transmit the user input data back and forth between the terminal and the server (corresponding to steps 116 to 120 shown in FIG. 1).

In fact, after the server in step 202 stores the present application user input data, it is transmitted directly from the server to the terminal in step 206. And it is only when the terminal needs to execute a backfilling operation that it issues a data acquisition request (i.e., step 204) to the server, with the result that the user input data need only undergo a unified encoding and decoding operation on the server, without having to consider compatibility issues between the server and the terminal browser. Therefore, it is not possible that backfilled data would appear with garbled characters because of incompatibility between the server and the terminal browser.

In the present embodiment, when the server sends the first page user input data and the associated input box identifiers back to the terminal, it can employ a streaming form and thus avoid having an excessively long get request URL truncated when there is too much data. Parameter errors in such cases make it impossible to backfill data correctly.

### 2. Server side

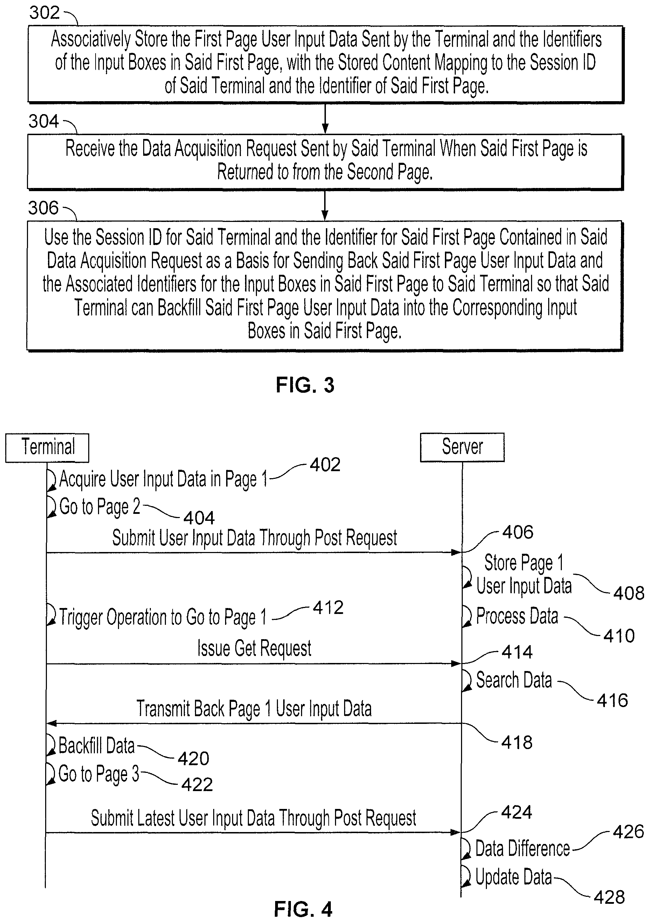

Please refer to FIG. 3. FIG. 3 presents a flowchart of a server side-based data backfilling method of an exemplary embodiment of the present application. This method is applied to servers, and it may comprise the steps below:

Step 302: Associatively store the first page user input data sent by the terminal and the identifiers of the input boxes in said first page, with the stored content mapping to the sessionID of said terminal and the identifier of said first page.

In the present embodiment, the server may employ the memcache caching framework to associatively store user input data with input box identifiers so as to achieve highspeed access of data.

Step 304: Receive the data acquisition request sent by said terminal when said first page is returned to from the second page.

In the present embodiment, after going from one page to another on the terminal browser, the server does not have to transmit user input data and other such data to the terminal (corresponding to step 112 shown in FIG. 1), but only needs to respond to the data acquisition request sent by the terminal.

In the present embodiment, the data acquisition request may take the form of a get request. However, since the server does not send information such as user input data and input box identifiers back to the terminal in advance (corresponding to step 112 shown in FIG. 1), the get request need not contain information such as user input data and input box identifiers, but only contains the first page URL and carries the sessionID used by the server to perform terminal identification.

Step 306: Use the sessionID for said terminal and the identifier for said first page contained in said data acquisition request as a basis for sending back said first page user input data and the associated identifiers for the input boxes in said first page to said terminal so that said terminal can backfill said first page user input data into the corresponding input boxes in said first page.

In the present embodiment, the user input data sent by the server to the terminal is the stored content in step 302 and not the get request from the terminal. Thus, the data needs to undergo a character encoding or decoding operation only when saved or extracted by the server and does not need to be encoded or decoded by the terminal browser. Thus, no garbled characters will appear as a result of incompatibility between the terminal browser and the server.

As is clear from the embodiment described above, the present application associatively stores user input data and input box identifiers on a server. The server "stores" the received data in the true sense and does not "record" it as in the related art. That is, the life cycle of the data stored on the server is based on "sessions" (equivalent to the effective term of the sessionID currently allocated to the terminal browser). As a result, when the terminal performs a page data backfill operation, there is no need to transmit the user input data and input box identifiers repeatedly back and forth between the terminal and the server. Rather, the server simply directly sends its stored content to the terminal. That is, the server performs unified encoding and decoding operations on stored content such as user input data, without need for terminal browser encoding and decoding operations. Moreover, no garbled characters will appear as a result of incompatibility between the server and the terminal browser.

The following is a detailed explanation of the exchange of information between a terminal and a server in light of FIG. 4. FIG. 4 presents a flowchart of a data backfilling method of an exemplary embodiment of the present application. As shown in FIG. 4, the method may comprise the steps below:

Step 402: Acquire the user input data in page 1 of the terminal browser. Assume that page 1 is the web page where the user executes account registration. For example, the user could fill in their own name " 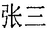 (Zhang San) " and age "10" in the "Name" and "Age" input boxes in page 1.

Step 404: The user initiates a jump to page 2. For example, by clicking the "Next" operation button on page 1, the user triggers this go to operation.

Step 406: Through a post request, the terminal browser submits the data input by the user in page 1 to the server.

Step 408: The server receives the page 1 user input data and
associatively stores the user input data and the input box identifiers.

In the present embodiment, the server can regard the terminal sessionID and the page 1 URL or URI as key words and store the user input data and associated input box identifiers in a cache, such as a memcache cache. Or the server may store the received data into another form of storage space, such as a database. The present application imposes no restrictions in this regard.

Step 410: The server may process (e.g., perform a data check on) the recorded user input data.

Step 412: If, while performing an operation in page 2, the user executes a jump to page 1 (if, for example, the user clicks the "Previous" button on page 2), the page 1 data backfilling operation consisting of steps 414 through 420 will be triggered.

Step 414: The terminal browser issues a get request to the server.

In the present embodiment, because the server did not send the page 1 user input data back to the terminal earlier, and because the present application does not require repeated transmission of the user input data back and forth between the terminal browser and the server, the get request need only contain the page 1 URL and does not have to add the user input data, the input box identifiers and so on after the URL and thereupon send it to the server, unlike in step 116 shown in FIG. 1. Therefore, the information that the user sees in the address bar in the terminal browser is different from "http://www.123456789.com?name= 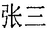 &age=10" shown above; it is simply "http://www.123456789.com."

Step 416: Use the page 1 URL or URI contained in the get request and the sessionID transmitted together with it when the terminal sent the get request to search the cache for the stored content corresponding to the "sessionID + URL" or "sessionID + URI" combination, i.e., corresponding to the page 1 user input data and the corresponding input box identifiers.

Step 418: Transmit the found page 1 user input data and other found stored content back to the terminal.

Step 420: The terminal browser backfills the user input data in the data transmitted back by the server into the corresponding input boxes in page 1.

In the embodiment described above, the server implements associative storage of data submitted by the terminal, and the server transmits data according to the terminal-issued get request back to the terminal in order to achieve data backfill, with the result that the user input data received by the terminal is subjected by the server alone to unified character encoding and decoding operations in step 406 (server encodes received data for storage in cache) and step 418 (after decoding located data, server sends it back to terminal) and does not require encoding and decoding operations by the terminal browser. Thus, there is no need for terminal browser and server encoding operations to be compatible, and no garbled characters will result in the backfill data.

Step 422: After completing a page 1 viewing or editing operation, the user triggers an operation to go to another page, e.g., to page 3.

Step 424: Similar to step 406, through a post request, the terminal browser associatively sends the latest user input data and input box identifier to the server.

Step 426: The server uses the terminal's sessionID and page 1 identifier to search for stored user input data and associated input box identifiers and matches it with currently received data. It thus determines whether the stored user input data corresponding to the same input box identifier differs from the most recent user input data.

Step 428: In the case of a difference in data, the server's stored content will be updated.

In the present embodiment described above, the server subjects page 1 user input data to difference assessments and data updating. In addition to the server implementing data difference assessments, the terminal may also test the update status of the user input data. For example, it compares the latest user input data with the user input data received in step 418. If there is a data difference, it associatively sends the appropriate latest user input data and the input box identifiers to the server so that the server can perform data updating.

As is clear from the embodiment described above, the present application implements "storage" in the true sense on the server. That is, the server associatively stores all the data it has received with keys. As a result, the terminal browser may at any time use a key to obtain the corresponding stored data. Thus, the number of data transmissions between the terminal browser and the server is reduced so as to solve the garbled character problem arising from the data transmission process.

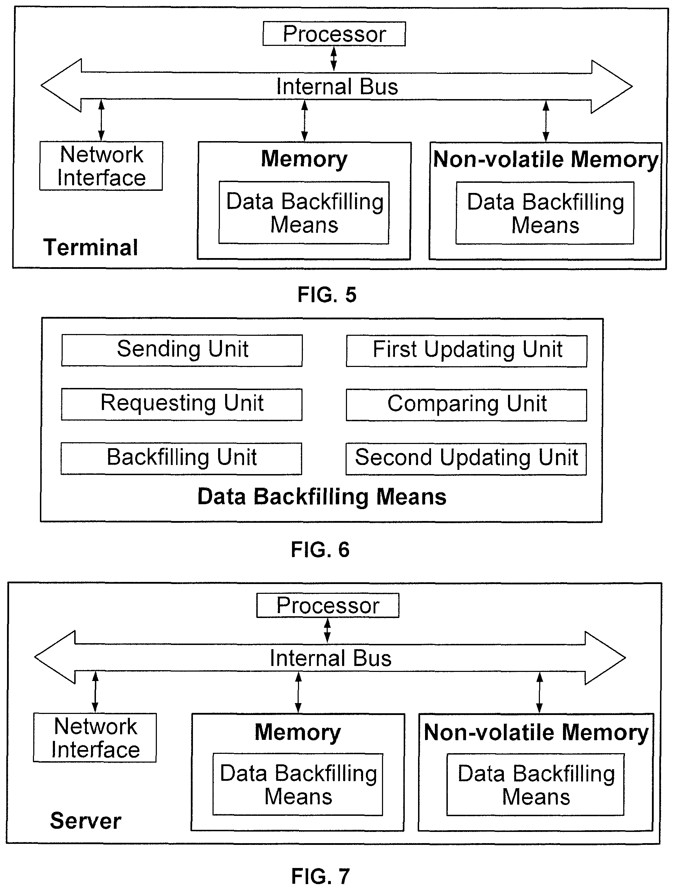

FIG. 5 presents a structural diagram of a terminal of an exemplary embodiment of the present application. Please refer to FIG. 5. In the hardware layer, the terminal includes a processor, an internal bus, a network interface, memory and non-volatile memory. Of course, it may also include other hardware needed for services. The processor fetches the corresponding computer program from the non-volatile memory into the memory and then runs it. A data backfilling means is formed in the logical layer.

Of course, in addition to realizing the means in the form of software, the present application may also realize it in other forms, e.g., as a logic device or as a combination of hardware and software. In other words, the executing entities of the processing flow below are not limited to the various logic units, but may also be hardware or logic devices.

Please refer to FIG. 6. In a software implementation, the data backfilling means may comprise a sending unit, a requesting unit and a backfilling unit, wherein:
a sending unit, which associatively sends user input data in the first page of the terminal and the identifiers of the input boxes in said first page to a server for them to be stored by said server, with the stored content mapping to the sessionID of said terminal and to the identifier of said first page;
a requesting unit, which sends a data acquisition request to said server when said first page is returned to from a second page, said data acquisition request comprising the sessionID of said terminal and the identifier of said first page;
a backfilling unit, which receives said first page user input data and the associated identifiers of the input boxes in said first page sent back by said server according to said data acquisition request and takes said first page user input data and backfills it into the corresponding input boxes in said first page.

Optionally, said sending unit specifically is for:
taking said first page user input data and said first page input box identifiers and associatively generating them as packaged data according to a preset format;
sending said packaged data to said server.

Optionally, said preset format is JSON format.

Optionally, it further comprises:
a first updating unit, which, when said first page is switched to another page, associatively sends the latest user input data in said first page and the identifiers for the input boxes in said first page to said server so that said server can update storage content mapped to said terminal's sessionID and said first page identifier.

Optionally, it further comprises:
a comparing unit, which, when said first page is switched to another page, compares the latest user input data in said first page to the user input data sent back by said server;
a second updating unit, which, if the comparison result is not identical, associatively sends the differing user input data and corresponding input box identifiers to said server so that said server will update said storage content.

FIG. 7 presents a structural diagram of a server of an exemplary embodiment of the present application. Please refer to FIG. 7. In the hardware layer, the server includes a processor, an internal bus, a network interface, memory and non-volatile memory. Of course, it may also include other hardware needed for services. The processor fetches the corresponding computer program from the non-volatile memory into the memory and then runs it. A data backfilling means is formed in the logical layer.

Of course, in addition to realizing the means in the form of software, the present application may also realize it in other forms, e.g., as a logic device or as a combination of hardware and software. In other words, the executing entities of the processing flow below are not limited to the various logic units, but may also be hardware or logic devices.

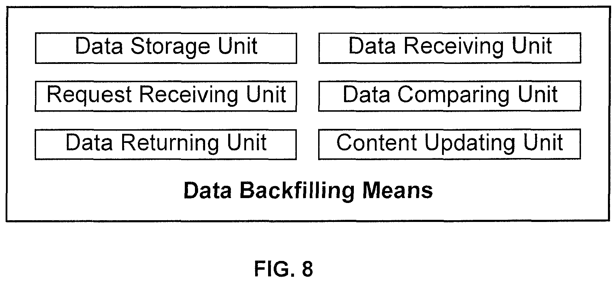

Please refer to FIG. 8. In a software implementation, the data backfilling means may comprise a data storage unit, a requesting receiving unit, and a data returning unit, wherein:
a data storage unit, which associatively stores the first page user input data sent by the terminal and the identifiers of the input boxes in said first page, with the stored content mapping to the sessionID of said terminal and the identifier of said first page;
a request receiving unit, which receives the data acquisition request sent by said terminal when said first page is returned to from the second page;
a data returning unit, which uses the sessionID for said terminal and the identifier for said first page contained in said data acquisition request as a basis for sending back said first page user input data and the associated identifiers for the input boxes in said first page to said terminal so that said terminal can backfill said first page user input data into the corresponding input boxes in said first page.

Optionally, it further comprises:
a data receiving unit, which receives said first page user input data and the associated identifiers for the input boxes in said first page sent by said terminal when said first page is switched to another page;
a comparing unit, which compares the latest user input data in said first page to already stored said first page user input data;
a data updating unit, which, if the result is not identical, updates the storage content mapping to the sessionID of said terminal and the identifier of said first page.

Therefore, the present application uses associative storage of page data on a server, with the result that the server performs unified encoding and decoding operations on the page data and no garbled characters appear because of terminal-side browser type differences or because of incompatibilities between browser and server. It thus ensures smooth backfilling of page data.

In one typical configuration of the present application, the computing equipment comprises one or more processors (CPUs), input/output interfaces, network interfaces and memory.

Memory may include such forms as volatile memory in computer-readable media, random access memory (RAM) and/or non-volatile memory, such as read-only memory (ROM) or flash memory (flash RAM). Memory is an example of a computer-readable medium.

Computer-readable media, including permanent and non-permanent and removable and non-removable media, may achieve information storage by any method or technology. Information can be computer-readable commands, data structures, program modules, or other data. Examples of computer storage media include but are not limited to phase-change memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disk read-only memory (CD-ROM), digit multifunction disk (DVD) or other optical storage, magnetic cassettes, magnetic tape or magnetic disc storage, or other magnetic storage equipment or any other non-transmission media that can be used to store information that is accessible to computers. As defined in this document, computer-readable media does not include temporary computer-readable media, (transitory media), such as modulated data signals and carrier waves.

Furthermore, the term "comprise" or "contain" or any of their variants are to be taken in their non-exclusive sense. Thus, processes, methods, products, or devices that comprise a series of elements not only comprise those elements, but also comprise other elements that have not been explicitly listed or elements that are intrinsic to such processes, methods, products or devices. In the absence of further limitations, elements that are limited by the phrase "comprises a(n)..." do not exclude the existence of additional identical elements in processes, methods, products or devices that comprise said elements.

The above-described are merely preferred embodiments of the present application and do not serve to limit the present application. Any modifications, equivalent substitutions, or improvements that are performed within the principles of the present application shall be contained within the protective scope of the present application.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method, comprising:
sending (202), to a server, user input data corresponding to respective ones of one or more input boxes at a first web page and one or more input box identifiers associated with the one or more input boxes, wherein the user input data is associated with a session identifier associated with a terminal and a first web page identifier, wherein the user input data corresponding to respective ones of the one or more input boxes at the first web page is character encoded by and stored by the server upon being received by the server;
receiving an indication, at the terminal, that a user selection to view the first web page has been performed at a second web page;
in response to the indication, sending (204) a data acquisition request to the server, wherein the data acquisition request comprises the session identifier associated with the terminal and the first web page identifier;
receiving (206), from the server, the user input data corresponding to respective ones of the one or more input boxes at the first web page and the one or more associated input box identifiers, wherein the user input data corresponding to respective ones of the one or more input boxes at the first web page was character decoded by the server before being sent to the terminal by the server; and
presenting, at the terminal, the first web page including the user input data corresponding to respective ones of the one or more input boxes.

2. The method of claim 1, wherein the user input data corresponding to respective ones of the one or more input boxes at the first web page is not stored at the terminal.

3. The method of claim 1, wherein sending (202) the user input data corresponding to respective ones of the one or more input boxes at the first web page comprises to package the user input data corresponding to respective ones of the one or more input boxes at the first web page according to a preset format and to send a package of data to the server.

4. The method of claim 1, wherein sending (202) the user input data corresponding to respective ones of the one or more input boxes at the first web page comprises packaging the user input data corresponding to respective ones of the one or more input boxes at the first web page according to a preset format and sending a package of data to the server, wherein the preset format comprises a JavaScript Object Notation, JSON, format.

5. The method of claim 1, wherein the indication comprises a first indication, wherein the method further comprising:
receiving updated user input data corresponding to respective ones of the one or more input boxes at the first web page;
receiving a second indication at the terminal that a third web page is selected; and
in response to the second indication, sending the updated user input data corresponding to respective ones of the one or more input boxes at the first web page to the server, wherein the updated user input data is associated with the session identifier associated with the terminal and the first web page identifier.

6. A system comprising a terminal and a server, whereby the terminal is configured to:
send (202), to the server, user input data corresponding to respective ones of one or more input boxes at a first web page and one or more input box identifiers associated with the one or more input boxes, wherein the user input data is associated with a session identifier associated with a terminal and a first web page identifier, wherein the user input data corresponding to respective ones of the one or more input boxes at the first web page is character encoded by and stored by the server upon being received by the server;
receive an indication, at the terminal, that the first web page is selected to be returned to from a second web page;
in response to the indication, send (204) a data acquisition request to the server, wherein the data acquisition request comprises the session identifier associated with the terminal and the first web page identifier;
receive (206), from the server, the user input data corresponding to respective ones of the one or more input boxes at the first web page and the one or more associated input box identifiers, wherein the user input data corresponding to respective ones of the one or more input boxes at the first web page was character decoded by the server before being sent to the terminal by the server; and
present, at the terminal, the first web page including the user input data corresponding to respective ones of the one or more input boxes; and one or more memories coupled to the one or more processors and configured to provide instructions to the one or more processors.

7. The system of claim 6, wherein the user input data corresponding to respective ones of the one or more input boxes at the first web page is not stored at the terminal.

8. The system of claim 6, wherein to send (202) the user input data corresponding to respective ones of the one or more input boxes at the first web page comprises to package the user input data corresponding to respective ones of the one or more input boxes at the first web page according to a preset format and to send a package of data to the server.

9. The system of claim 6, wherein to send (202) the user input data corresponding to respective ones of the one or more input boxes at the first web page comprises to package the user input data corresponding to respective ones of the one or more input boxes at the first web page according to a preset format and to send a package of data to the server, wherein the preset format comprises a JavaScript Object Notation, JSON, format.

10. The system of claim 6, wherein the indication comprises a first indication, wherein the one or more processors are further configured to:
receive updated user input data corresponding to respective ones of the one or more input boxes at the first web page;
receive a second indication at the terminal that a third web page is selected; and
in response to the second indication, send the updated user input data corresponding to respective ones of the one or more input boxes at the first web page to the server, wherein the updated user input data is associated with the session identifier associated with the terminal and the first web page identifier.

## Patentansprüche

1. Verfahren, das Folgendes beinhaltet:
Senden (202), an einen Server, von Benutzereingabedaten, die jeweiligen von einem oder mehreren Eingabefeldern auf einer ersten Webseite und einem oder mehreren mit den ein oder mehreren Eingabefeldern assoziierten Eingabefeldkennungen entsprechen, wobei die Benutzereingabedaten mit einer Sitzungskennung assoziiert sind, die mit einem Endgerät und einer ersten Webseitenkennung assoziiert ist, wobei die Benutzereingabedaten, die jeweiligen der ein oder mehreren Eingabefelder auf der ersten Webseite entsprechen, bei Empfang durch den Server vom Server zeichenencodiert und gespeichert werden;
Empfangen einer Anzeige an dem Endgerät, dass auf einer zweiten Webseite eine Benutzerauswahl zum Betrachten der ersten Webseite erfolgt ist;
Senden (204), als Reaktion auf die Anzeige, einer Datenerfassungsanforderung an den Server, wobei die Datenerfassungsanforderung die Sitzungskennung umfasst, die mit dem Endgerät und der ersten Webseitenkennung assoziiert ist;
Empfangen (206), von dem Server, der Benutzereingabedaten, die jeweiligen der ein oder mehreren Eingabefelder auf der ersten Webseite und der ein oder mehreren assoziierten Eingabefeldkennungen entsprechen, wobei die Benutzereingabedaten, die jeweiligen der ein oder mehreren Eingabefelder auf der ersten Webseite entsprechen, vor dem Senden an das Endgerät durch den Server vom Server zeichendecodiert wurden; und
Präsentieren, an dem Endgerät, der ersten Webseite einschließlich der Benutzereingabedaten, die jeweiligen der ein oder mehreren Eingabefelder entsprechen.

2. Verfahren nach Anspruch 1, wobei die Benutzereingabedaten, die jeweiligen der ein oder mehreren Eingabefelder auf der ersten Webseite entsprechen, nicht an dem Endgerät gespeichert werden.

3. Verfahren nach Anspruch 1, wobei das Senden (202) der Benutzereingabedaten, die jeweiligen der ein oder mehreren Eingabefelder auf der ersten Webseite entsprechen, das Verpacken der Benutzereingabedaten, die jeweiligen der ein oder mehreren Eingabefelder auf der ersten Webseite entsprechen, gemäß einem voreingestellten Format und das Senden eines Datenpakets an den Server beinhaltet.

4. Verfahren nach Anspruch 1, wobei das Senden (202) der Benutzereingabedaten, die jeweiligen der ein oder mehreren Eingabefelder auf der ersten Webseite entsprechen, das Verpacken der Benutzereingabedaten, die jeweiligen der ein oder mehreren Eingabefelder auf der ersten Webseite entsprechen, gemäß einem voreingestellten Format und das Senden eines Datenpakets an den Server umfasst, wobei das voreingestellte Format eine JavaScript-Objektnotation, JSON, umfasst.

5. Verfahren nach Anspruch 1, wobei die Anzeige eine erste Anzeige umfasst, wobei das Verfahren ferner Folgendes beinhaltet:
Empfangen von aktualisierten Benutzereingabedaten, die jeweiligen der ein oder mehreren Eingabefelder auf der ersten Webseite entsprechen;
Empfangen einer zweiten Anzeige an dem Endgerät, dass eine dritte Webseite ausgewählt ist; und
Senden, als Reaktion auf die zweite Anzeige, der aktualisierten Benutzereingabedaten, die jeweiligen der ein oder mehreren Eingabefelder auf der ersten Webseite entsprechen, an den Server, wobei die aktualisierten Benutzereingabedaten mit der Sitzungskennung assoziiert sind, die mit dem Endgerät und der ersten Webseitenkennung assoziiert ist.

6. System mit einem Endgerät und einem Server, wodurch das Endgerät konfiguriert ist zum:
Senden (202), an den Server, von Benutzereingabedaten, die jeweiligen von einem oder mehreren Eingabefeldern auf einer ersten Webseite und einer oder mehreren mit den ein oder mehreren Eingabefeldern assoziierten Eingabefeldkennungen entsprechen, wobei die Benutzereingabedaten mit einer Sitzungskennung assoziiert sind, die mit einem Endgerät und einer ersten Webseitenkennung assoziiert ist, wobei die Benutzereingabedaten, die jeweiligen der ein oder mehreren Eingabefelder auf der ersten Webseite entsprechen, bei Empfang durch den Server vom Server zeichenencodiert undgespeichert werden;
Empfangen einer Anzeige an dem Endgerät, dass eine Auswahl erfolgt ist, zur ersten Webseite von einer zweiten Webseite zurückzukehren;
Senden (204), als Reaktion auf die Anzeige, einer Datenerfassungsanforderung an den Server, wobei die Datenerfassungsanforderung die Sitzungskennung umfasst, die mit dem Endgerät und der ersten Webseitenkennung assoziiert ist;
Empfangen (206), von dem Server, der Benutzereingabedaten, die jeweiligen der ein oder mehreren Eingabefelder auf der ersten Webseite und der ein oder mehreren assoziierten Eingabefeldkennungen entsprechen, wobei die Benutzereingabedaten, die jeweiligen der ein oder mehreren Eingabefelder auf der ersten Webseite entsprechen, vor dem Senden an das Endgerät durch den Server vom Server zeichendecodiert wurden; und
Präsentieren, an dem Endgerät, der ersten Webseite einschließlich der Benutzereingabedaten, die jeweiligen der ein oder mehreren Eingabefelder entsprechen; und
einem oder mehreren Speichern, die mit den ein oder mehreren Prozessoren gekoppelt und zum Versorgen der ein oder mehreren Prozessoren mit Befehlen konfiguriert sind.

7. System nach Anspruch 6, wobei die Benutzereingabedaten, die jeweiligen der ein oder mehreren Eingabefelder auf der ersten Webseite entsprechen, nicht an dem Endgerät gespeichert werden.

8. System nach Anspruch 6, wobei das Senden (202) der Benutzereingabedaten, die jeweiligen der ein oder mehreren Eingabefelder auf der ersten Webseite entsprechen, das Verpacken der Benutzereingabedaten, die jeweiligen der ein oder mehreren Eingabefelder auf der ersten Webseite entsprechen, gemäß einem voreingestellten Format und das Senden eines Datenpakets an den Server beinhaltet.

9. System nach Anspruch 6, wobei das Senden (202) der Benutzereingabedaten, die jeweiligen der ein oder mehreren Eingabefelder auf der ersten Webseite entsprechen, das Verpacken der Benutzereingabedaten, die jeweiligen der ein oder mehreren Eingabefelder auf der ersten Webseite entsprechen, gemäß einem voreingestellten Format und das Senden eines Datenpakets an den Server beinhaltet, wobei das voreingestellte Format eine JavaScript-Objektnotation, JSON, umfasst.

10. System nach Anspruch 6, wobei die Anzeige eine erste Anzeige umfasst, wobei die ein oder mehreren Prozessoren ferner konfiguriert sind zum:
Empfangen von aktualisierten Benutzereingabedaten, die jeweiligen der ein oder mehreren Eingabefelder auf der ersten Webseite entsprechen;
Empfangen einer zweiten Anzeige an dem Endgerät, dass eine dritte Webseite ausgewählt ist; und
Senden, als Reaktion auf die zweite Anzeige, der aktualisierten Benutzereingabedaten, die jeweiligen der ein oder mehreren Eingabefelder auf der ersten Webseite entsprechen, an den Server, wobei die aktualisierten Benutzereingabedaten mit der Sitzungskennung assoziiert sind, die mit dem Endgerät und der ersten Webseitenkennung assoziiert ist.

## Revendications

1. Un procédé, comprenant :
l'envoi (202), à un serveur, de données entrées par un utilisateur correspondant à des zones de saisie respectives d'une ou de plusieurs zones de saisie au niveau d'une première page web et d'un ou de plusieurs identifiants de zone de saisie associés aux une ou plusieurs zones de saisie, où les données entrées par un utilisateur sont associées à un identifiant de session associé à un terminal et à un premier identifiant de page web, où les données entrées par un utilisateur correspondant à des zones de saisie respectives des une ou plusieurs zones de saisie au niveau de la première page web sont codées par caractère et conservées en mémoire par le serveur à leur réception par le serveur,
la réception d'une indication, au niveau du terminal, indiquant qu'une sélection par un utilisateur de visionnage de la première page web a été exécutée au niveau d'une deuxième page web,
en réponse à l'indication, l'envoi (204) d'une demande d'acquisition de données au serveur, où la demande d'acquisition de données contient l'identifiant de session associé au terminal et le premier identifiant de page web,
la réception (206), à partir du serveur, des données entrées par un utilisateur correspondant à des zones de saisie respectives des une ou plusieurs zones de saisie au niveau de la première page web et des un ou plusieurs identifiants de zone de saisie associés, où les données entrées par un utilisateur correspondant à des zones de saisie respectives des une ou plusieurs zones de saisie au niveau de la première page web ont été décodées par caractère par le serveur avant d'être envoyées au terminal par le serveur, et
la présentation, au niveau du terminal, de la première page web comprenant les données entrées par un utilisateur correspondant à des zones de saisie respectives des une ou plusieurs zones de saisie.

2. Le procédé selon la Revendication 1, où les données entrées par un utilisateur correspondant à des zones de saisie respectives des une ou plusieurs zones de saisie au niveau de la première page web ne sont pas conservées en mémoire au niveau du terminal.

3. Le procédé selon la Revendication 1, où l'envoi (202) des données entrées par un utilisateur correspondant à des zones de saisie respectives des une ou plusieurs zones de saisie au niveau de la première page web comprend le conditionnement des données entrées par un utilisateur correspondant à des zones de saisie respectives des une ou plusieurs zones de saisie au niveau de la première page web en fonction d'un format prédéfini et l'envoi d'un conditionnement de données au serveur.

4. Le procédé selon la Revendication 1, où l'envoi (202) des données entrées par un utilisateur correspondant à des zones de saisie respectives des une ou plusieurs zones de saisie au niveau de la première page web comprend le conditionnement des données entrées par un utilisateur correspondant à des zones de saisie respectives des une ou plusieurs zones de saisie au niveau de la première page web en fonction d'un format prédéfini et l'envoi d'un conditionnement de données au serveur, où le format prédéfini comprend un format JavaScript Object Notation, JSON.

5. Le procédé selon la Revendication 1, où l'indication comprend une première indication, le procédé comprenant en outre :
la réception de données entrées par un utilisateur actualisées correspondant à des zones de saisie respectives des une ou plusieurs zones de saisie au niveau de la première page web,
la réception d'une deuxième indication au niveau du terminal indiquant qu'une troisième page web est sélectionnée, et
en réponse à la deuxième indication, l'envoi des données entrées par un utilisateur actualisées correspondant à des zones de saisie respectives des une ou plusieurs zones de saisie au niveau de la première page web au serveur, où les données entrées par un utilisateur actualisées sont associées à l'identifiant de session associé au terminal et au premier identifiant de page web.

6. Un système comprenant un terminal et un serveur, grâce à quoi le terminal est configuré de façon à :
envoyer (202), au serveur, des données entrées par un utilisateur correspondant à des zones de saisie respectives d'une ou de plusieurs zones de saisie au niveau d'une première page web et d'un ou de plusieurs identifiants de zone de saisie associés aux une ou plusieurs zones de saisie, où les données entrées par un utilisateur sont associées à un identifiant de session associé à un terminal et un premier identifiant de page web, où les données entrées par un utilisateur correspondant à des zones de saisie respectives des une ou plusieurs zones de saisie au niveau de la première page web sont codées par caractère et conservées en mémoire par le serveur à leur réception par le serveur,
recevoir une indication, au niveau du terminal, indiquant qu'une sélection a été exécutée au niveau d'une deuxième page web pour le visionnage à nouveau de la première page web,
en réponse à l'indication, envoyer (204) une demande d'acquisition de données au serveur, où la demande d'acquisition de données comprend l'identifiant de session associé au terminal et le premier identifiant de page web,
recevoir (206), à partir du serveur, les données entrées par un utilisateur correspondant à des zones de saisie respectives des une ou plusieurs zones de saisie au niveau de la première page web et les un ou plusieurs identifiants de zone de saisie associés, où les données entrées par un utilisateur correspondant à des zones de saisie respectives des une ou plusieurs zones de saisie au niveau de la première page web ont été décodées par caractère par le serveur avant d'être envoyées au terminal par le serveur, et
présenter, au niveau du terminal, la première page web comprenant les données entrées par un utilisateur correspondant à des zones de saisie respectives des une ou plusieurs zones de saisie, et
une ou plusieurs mémoires couplées aux un ou plusieurs processeurs et configurées de façon à fournir des instructions aux un ou plusieurs processeurs.

7. Le système selon la Revendication 6, où les données entrées par un utilisateur correspondant à des zones de saisie respectives des une ou plusieurs zones de saisie au niveau de la première page web ne sont pas conservées en mémoire au niveau du terminal.

8. Le système selon la Revendication 6, où l'envoi (202) des données entrées par un utilisateur correspondant à des zones de saisie respectives des une ou plusieurs zones de saisie au niveau de la première page web comprend le conditionnement des données entrées par un utilisateur correspondant à des zones de saisie respectives des une ou plusieurs zones de saisie au niveau de la première page web en fonction d'un format prédéfini et l'envoi d'un conditionnement de données au serveur.

9. Le système selon la Revendication 6, où l'envoi (202) des données entrées par un utilisateur correspondant à des zones de saisie respectives des une ou plusieurs zones de saisie au niveau de la première page web comprend le conditionnement des données entrées par un utilisateur correspondant à des zones de saisie respectives des une ou plusieurs zones de saisie au niveau de la première page web en fonction d'un format prédéfini et l'envoi d'un conditionnement de données au serveur, où le format prédéfini comprend un format JavaScript Object Notation, JSON.

10. Le système selon la Revendication 6, où l'indication comprend une première indication, où les un ou plusieurs processeurs sont configurés en outre de façon à :
recevoir des données entrées par un utilisateur actualisées correspondant à des zones de saisie respectives des une ou plusieurs zones de saisie au niveau de la première page web,
recevoir une deuxième indication au niveau du terminal indiquant qu'une troisième page web est sélectionnée, et
en réponse à la deuxième indication, envoyer les données entrées par un utilisateur actualisées correspondant à des zones de saisie respectives des une ou plusieurs zones de saisie au niveau de la première page web au serveur, où les données entrées par un utilisateur actualisées sont associées à l'identifiant de session associé au terminal et au premier identifiant de page web.
